# EUROPÄISCHE PATENTSCHRIFT

(11) **EP 0 674 113 B1**
(45) Veröffentlichungstag und Bekanntmachung des Hinweises auf die Patenterteilung: **13.05.1998**
(21) Anmeldenummer: 95102238.3
(22) Anmeldetag: 18.02.1995
(51) Int. Cl.: F16D 65/09

(54) **Trommelbremse für Fahrzeuge**
Drum brake for vehicles
Frein à tambour pour véhicules

(30) Priorität: 05.03.1994 DE 4407399
(43) Veröffentlichungstag der Anmeldung: 27.09.1995
(73) Patentinhaber: BPW Bergische Achsen Kommanditgesellschaft, 51674 Wiehl (DE)
(72) Erfinder: Laudszun, Heinz, Dr. Ing., D-51674 Wiehl (DE); Steiner, Helmut, Dipl. Ing., D-51674 Wiehl (DE); Leidig, Hans J., D-51580 Reichshof (DE)
(74) Vertreter: Stenger, Watzke & Ring Patentanwälte

(56) Entgegenhaltungen:
- FR-A- 2 389 040
- GB-A- 1 071 100
- GB-A- 2 087 493
- US-A- 3 314 507

## Beschreibung

Die Erfindung betrifft eine Trommelbremse für Fahrzeuge mit zwei an ihren Enden jeweils an einem am Achskörper befestigten Bremsträger abgestützten Bremsbacken, die an einem Ende über eine Bremsrolle durch einen Bremsnocken spreizbar und am anderen Ende auf einem fest mit dem Bremsträger verbundenem Lagerbolzen geringfügig schwenkbar gelagert sind, der mit einer auswechselbaren Lagerhülse versehen ist, auf der jeweils eine Bremsbacke mittels einer in ihrem Steg ausgebildeten, halbschalenartigen Lageröffnung gelagert ist.

Derartige Fahrzeug-Trommelbremsen sind aus der GB-2087493 bekannt. Um die halbschalenartigen Lageröffnungen auf dem Lagerbolzen zu halten, werden die Bremsbacken durch Rückzugfedern belastet.

Der Erfindung liegt die Aufgabe zugrunde, die bekannte Trommelbremse derart weiterzubilden, daß die Lagerhülsen nicht nur auf besonders einfache und sichere Weise auf dem jeweiligen Lagerbolzen des Bremsträgers festgehalten werden, sondern auch eine Klemmwirkung auf die Bremsbacken ausüben, so daß auf die bisher notwendigen Zugfedern zur Lagesicherung der Bremsbacken verzichtet werden kann.

Die Lösung dieser Aufgabenstellung durch die Erfindung ist dadurch gekennzeichnet, daß jede Lagerhülse im Ausgangszustand mit einem ovalen Querschnitt ausgeführt und in Längsrichtung geschlitzt ist.

Durch die Ausbildung der Lagerhülsen mit einem ovalen Querschnitt und durch das Schlitzen der Lagerhülsen ergibt sich nach dem Aufsetzen der Bremsbackenstege mit ihren Lageröffnungen auf die Lagerhülsen eine Vorspannung, die eine ausreichend große Klemmwirkung auf die Bremsbacke ausübt, so daß auf die bisher verwendeten Zugfedern zur Lagesicherung der Bremsbacken verzichtet werden kann. Insgesamt ergibt sich somit eine Vereinfachung der Lagerung der Bremsbacken einer Trommelbremse auf den Bremsträgern, und zwar ohne Beeinträchtigung der Funktionssicherheit der Bremse. Weiterhin ergibt sich der Vorteil, daß die dem Verschleiß unterliegenden Lagerhülsen, die aus besonders verschleißfestem Material hergestellt sind, einfacher ausgewechselt werden können.

Um den Sitz der Lagerhülsen auf den Lagerbolzen zu verbessern und damit die gewünschte Klemmwirkung sicherzustellen, sind die Enden der geschlitzten Lagerhülsen erfindungsgemäß mit nach innen weisenden Klemmkanten versehen.

Wenn die Lagerhülsen gemäß einem weiteren Merkmale der Erfindung an ihren Klemmkanten mit die Oberfläche der Lagerbolzen bzw. Lagerzapfen eingreifenden Zähnen versehen werden, wird nicht nur eine verbesserte Sicherung der Lagerhülsen gegen Verdrehen auf dem jeweiligen Lagerbolzen bzw. Lagerzapfen erzielt, sondern auch eine Sicherung der Lagerhülsen gegen axiales Verschieben geschaffen.

Bei einer bevorzugten Ausführungsform der Erfindung sind die Lagerbolzen in an sich bekannter Weise als einstückig am Bremsträger angeformte Lagerzapfen ausgebildet.

Um die Sicherung der Lagerhülsen auf dem Lagerbolzen bzw. Lagerzapfen zu verbessern, kann jeder Lagerzapfen erfindungsgemäß mit einer mit den Klemmkanten und/oder Zähnen der Lagerhülse zusammenwirkenden Abflachung ausgebildet werden.

Sofern Bremsbacken mit jeweils zwei an der Unterseite des Bremsbelagträgers angeordneten Bremsbackenstegen verwendet werden, wird der Bremsträger erfindungsgemäß mit zwei Paaren paralleler und nach außen abstehender Lagerzapfen ausgebildet, so daß sich eine besonders haltbare Konstruktion für die Lagerung der Bremsbacken ergibt.

Auf der Zeichnung ist ein Ausführungsbeispiel der erfindungsgemäßen Trommelbremse dargestellt, und zwar zeigen:
- Fig. 1: eine Stirnansicht einer Trommelbremse anhand eines Querschnittes durch den Achskörper,
- Fig. 2: eine Draufsicht auf die Trommelbremse nach Fig. 1, wobei jedoch der besseren Übersichtlichkeit wegen eine der beiden Bremsbacken weggelassen wurde,
- Fig. 3: eine Seitenansicht eines Bremsträgers,
- Fig. 4: eine Stirnansicht des Bremsträgers nach Fig. 3,
- Fig. 5: eine vergrößerte Darstellung eines mit einer Lagerhülse versehenen Lagerzapfens eines im übrigen nicht dargestellten Bremsträgers vor dem Aufsetzen eines Bremsbackensteges und
- Fig. 6: eine der Fig. 5 entsprechende Darstellung nach dem Aufsetzen des Bremsbackensteges auf den mit der Lagerhülse versehenen Lagerzapfen.

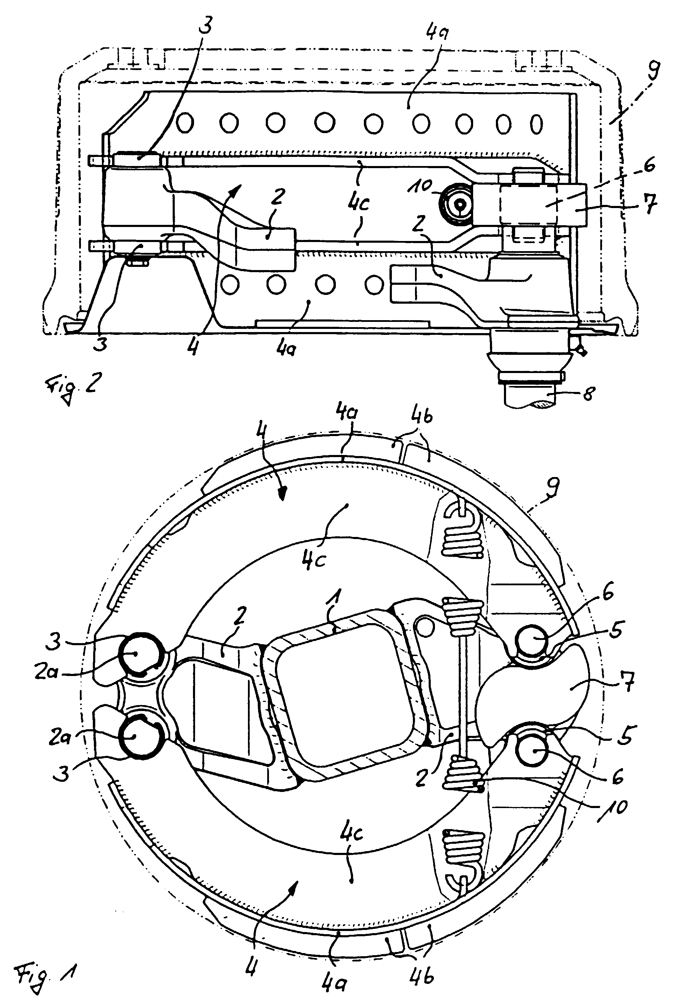

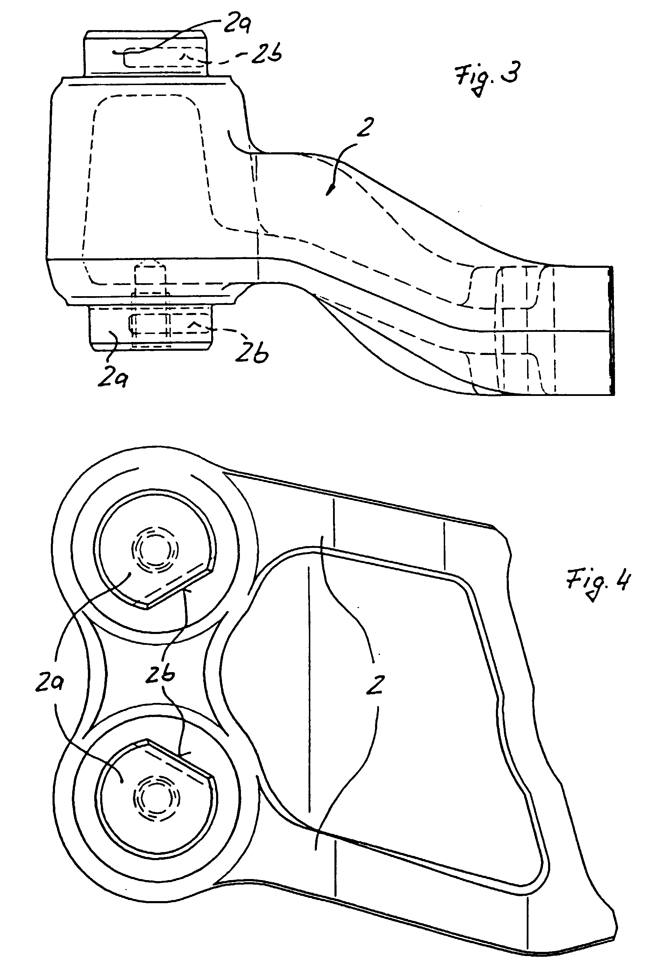

Die in den Fig. 1 und 2 anhand eines Ausführungsbeispiels dargestellte Fahrzeug-Trommelbremse ist an einem Achskörper 1 angeordnet, der in Fig. 1 im Schnitt dargestellt ist und einen rohrförmigen, etwa quadratischen Querschnitt aufweist. An gegenüberliegenden Seiten dieses Achskörpers 1 ist jeweils ein Bremsträger 2 angeschweißt, der vergrößert in den Fig. 3 und 4 dargestellt ist.

Dieser beim Ausführungsbeispiel als Schmiedeteil ausgebildeter Bremsträger 2 ist einstückig mit insgesamt vier Lagerzapfen 2a ausgebildet. Diese Lagerzapfen 2a stehen paarweise von jeder Seite des Bremsträgers 2 nach außen ab, wobei die auf den beiden gegenüberliegenden Seiten ausgebildeten Lagerzapfen 2a miteinander fluchten. Wie am besten in Fig. 4 zu erkennen ist, hat jeder Lagerzapfen 2a eine Abflachung 2b. Der Bremsträger 2 mit den Lagerzapfen 2a wird als Einzelteil fertig bearbeitet und mittels Vorrichtungen paßgenau an den Achskörper 1 angeschweißt.

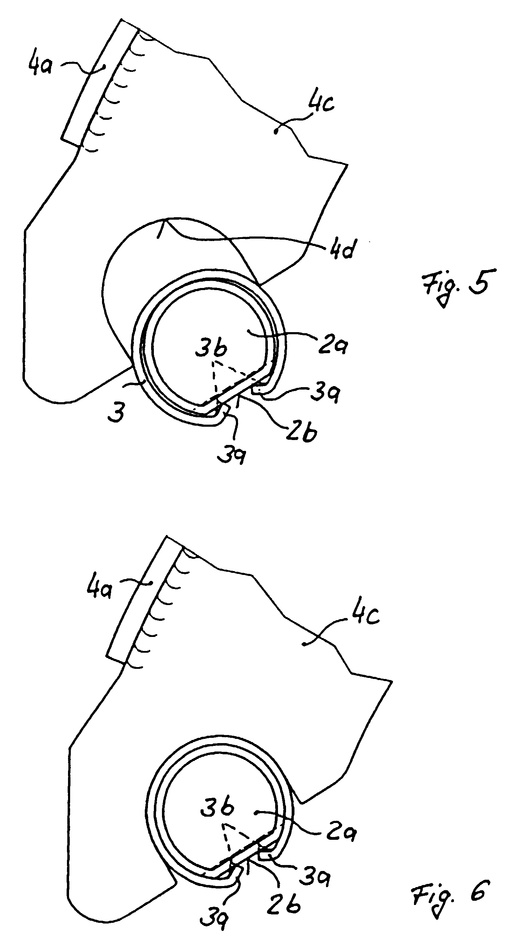

Auf jeden Lagerzapfen 2a ist eine geschlitzte Lagerhülse 3 aus Federstahl aufgesetzt, die vergrößert in den Fig. 5 und 6 dargestellt ist. Wie diese Darstellungen erkennen lassen, sind die Enden der geschlitzten Lagerhülse 3 durch Abwinkeln mit einer Klemmkante 3a ausgebildet, die beim Ausführungsbeispiel zusätzlich mit Zähnen 3b versehen ist. Die Klemmkanten 3a und Zähne 3b liegen im Bereich der Abflachung 2b des Lagerzapfens 2a, so daß eine gute Lagesicherung der auf dem Lagerzapfen 2a angeordneten Lagerhülse 3 erzielt wird, und zwar nicht nur gegen Verdrehen in Umfangsrichtung, sondern auch gegen Verschieben in axialer Richtung des Lagerzapfens 2a.

Wie weiterhin aus Fig. 5 hervorgeht, besitzt die Lagerhülse 3 im Ausgangszustand einen ovalen Querschnitt, so daß sie in diesem Ausgangszustand an gegenüberliegenden Seiten geringfügig von der Oberfläche des Lagerzapfens 2a absteht.

Die mit den Lagerhülsen 3 versehenen Lagerzapfen 2a der Bremsträger 2 dienen zur verschwenkbaren Lagerung von Bremsbacken 4, die am besten in Fig. 1 zu erkennen sind. Jede dieser Bremsbacken 4 umfaßt einen Bremsbelagträger 4a, auf dessen Oberseite Bremsbeläge 4b auswechselbar befestigt werden.

Auf der Unterseite jedes Bremsbelagträgers 4a sind zwei parallel und im Abstand zueinander verlaufende Bremsbackenstege 4c angeordnet, die zur Lagerung der Bremsbacken 4 an den beiden Bremsträgern 2 dienen.

Zu diesem Zweck sind an einem Ende der beiden Bremsbackenstege 4c Lageröffnungen 4d ausgebildet. Eine dieser Lageröffnungen 4d ist am besten in Fig. 5 zu erkennen. Sie umfaßt eine halbkreisförmige Lagerfläche und sich hieran anschließende, parallel zueinander verlaufende Verlängerungen. Mit diesen insgesamt gabelförmigen Lageröffnungen 4d wird das eine Ende jeder Bremsbacke 4 auf zwei jeweils mit einer Lagerhülse 3 versehene Lagerzapfen 2a des einen Bremsträgers 2 aufgesetzt. Durch die Verformung der im Ausgangszustand gemäß Fig. 5 ovalen Lagerhülse 3 nach dem Aufsetzen der Lageröffnung 4d der Bremsbacke 4 ergibt sich eine Vorspannkraft, die das jeweilige Ende der Bremsbacke 4 sicher auf den beiden Lagerzapfen 2a des Bremsträgers 2 festhält. Die Vorspannung der Lagerhülsen 3 auf die Lageröffnung 4d der Bremsbacken 4 vermindert außerdem Bremsgeräusche.

Am jeweils anderen Ende ist jede Bremsbacke 4 mit einer Bremsrolle 5 versehen, die auf einem Lagerbolzen 6 drehbar gelagert ist und mit einem Bremsnocken 7 zusammenwirkt, der am Ende einer in Fig. 2 zu erkennenden Bremsnockenwelle 8 angeordnet ist. Durch ein Verdrehen dieser Bremsnockenwelle 8 und damit des Bremsnockens 7 wird über die Bremsrollen 5 eine Spreizung der mit ihrem anderen Ende auf den Lagerzapfen 2a abgestützten Bremsbacken 4 bewirkt, so daß sich die Bremsbeläge 4b an der Innenseite der strichpunktiert in den Fig. 1 und 2 angedeuteten Bremstrommel 9 anlegen. Um nach Beendigung des hierdurch erzeugten Bremsvorganges eine Rückkehr der Bremsbacken 4 in die Ausgangslage zu bewirken, ist eine Rückzugfeder 10 vorgesehen, die mit ihren Enden in abgewinkelte Ösen der Bremsbelagträger 4a eingehängt ist, wie dies die Fig. 1 erkennen läßt.

Aus dieser Fig. 1 geht schließlich hervor, daß die insgesamt gabelförmigen Lageröffnungen 4d der beiden Bremsbacken 4 unter einem stumpfen Winkel mit zum Achskörper 1 weisenden Winkelscheitel verlaufen, so daß die über die Lageröffnungen 4d unter Zwischenfügen der Lagerhülsen 3 auf die Lagerzapfen 2a ausgeübten Lagerkräfte zuverlässig aufgenommen werden und die Bremsbacken 4 sowohl während des Betriebes als auch bei einem Überdrehen ihrer Bremsbeläge 4b zuverlässig auf den Lagerzapfen 2a gehalten werden.

### Bezugszeichenliste:

- 1: Achskörper
- 2: Bremsträger
- 2a: Lagerzapfen
- 2b: Abflachung
- 3: Lagerhülse
- 3a: Klemmkante
- 3b: Zahn
- 4: Bremsbacke
- 4a: Bremsbelagträger
- 4b: Bremsbelag
- 4c: Bremsbackensteg
- 4d: Lageröffnung
- 5: Bremsrolle
- 6: Lagerbolzen
- 7: Bremsnocken
- 8: Bremsnockenwelle
- 9: Bremstrommel
- 10: Rückzugfeder

## Patentansprüche

1. Trommelbremse für Fahrzeuge mit zwei an ihren Enden jeweils an einem am Achskörper (1) befestigten Bremsträger (2) abgestützten Bremsbacken (4), die an einem Ende über eine Bremsrolle (5) durch einen Bremsnocken (7) spreizbar und am anderen Ende auf einem fest mit dem Bremsträger (2) verbundenem Lagerbolzen (2a) geringfügig verschwenkbar gelagert sind, der mit einer auswechselbaren Lagerhülse (3) versehen ist, auf der jeweils eine Bremsbacke (4) mittels einer in ihrem Steg (4c) ausgebildeten, halbschalenartigen Lageröffnung (4d) gelagert ist,
**dadurch gekennzeichnet,**
daß jede Lagerhülse (3) im Ausgangszustand mit einem ovalen Querschnitt ausgeführt und in Längsrichtung geschlitzt ist.

2. Trommelbremse nach Anspruch 1, dadurch gekennzeichnet, daß die Enden der geschlitzten Lagerhülse (3) mit nach innen weisenden Klemmkanten (3a) versehen sind.

3. Trommelbremse nach Anspruch 1 oder 2, dadurch gekennzeichnet, daß die Lagerhülsen (3) an ihren Klemmkanten (3a) mit in die Oberfläche der Lagerbolzen bzw. Lagerzapfen (2a) eingreifenden Zähnen (3b) versehen sind.

4. Trommelbremse nach einem der Ansprüche 1 bis 3, dadurch gekennzeichnet, daß die Lagerbolzen als einstückig am Bremsträger (2) angeformte Lagerzapfen (2a) ausgebildet sind.

5. Trommelbremse nach einem der Ansprüche 1 bis 4, dadurch gekennzeichnet, daß jeder Lagerbolzen bzw. Lagerzapfen (2a) mit einer mit den Klemmkanten (3a) und/oder Zähnen (3b) der Lagerhülse (3) zusammenwirkenden Abflachung (2b) ausgebildet ist.

6. Trommelbremse nach einem der Ansprüche 1 bis 5 für Bremsbacken (4) mit jeweils zwei an der Unterseite des Bremsbelagträgers (4a) angeordneten Bremsbackenstegen (4c), dadurch gekennzeichnet, daß der Bremsträger (2) mit zwei Paaren paralleler und nach außen abstehender Lagerzapfen (2) ausgebildet ist.

## Claims

1. Drum brake for vehicles, having two brake shoes (4) which are supported at their ends in each case on a brake anchor plate (2), secured on the axle body (1), and are mounted such that they can expand at one end by means of a brake cam (7) via a brake roller (5), and at the other end such that they can slightly pivot on a bearing peg (2a) which is connected fixedly to the brake anchor plate (2) and is provided with an exchangeable bearing sleeve (3), on which in each case one brake shoe (4) is mounted by means of a bearing opening (4d) which is constructed in its web (4c) and is in the form of a half shell, characterized in that each bearing sleeve (3) is configured such that it has an oval cross-section in the initial state and is slit in the longitudinal direction.

2. Drum brake according to Claim 1, characterized in that the ends of the slit bearing sleeve (3) are provided with inwardly pointing clamping edges (3a).

3. Drum brake according to Claim 1 or 2, characterized in that the bearing sleeves (3) are provided on their clamping edges (3a) with teeth (3b) engaging into the surface of the bearing pins or bearing pegs (2a).

4. Drum brake according to one of Claims 1 to 3, characterized in that the bearing pins are designed as bearing pegs (2a) moulded integrally onto the brake anchor plate (2).

5. Drum brake according to one of Claims 1 to 4, characterized in that each bearing pin or bearing peg (2a) is constructed with a flattened portion (2b) which interacts with the clamping edges (3a) and/or teeth (3b) of the bearing sleeve (3).

6. Drum brake according to one of Claims 1 to 5 for brake shoes (4) having in each case two brake-shoe webs (4c) arranged on the underside of the brake-lining carrier (4a), characterized in that the brake anchor plate (2) is constructed with two pairs of parallel and outwardly protruding bearing pegs (2a).

## Revendications

1. Frein à tambour pour véhicules comportant deux segments de frein (4), prenant chacun appui par leurs extrémités sur un support de frein (2) fixé sur le corps d'essieu (1), et qui, à une extrémité, sont montés de manière à pouvoir être écartés par une came de frein (7) par l'intermédiaire d'un cylindre de frein (5), et à l'autre extrémité, sont montés de manière à pouvoir basculer légèrement sur un axe fixé solidairement au support de frein (2) et muni d'un manchon remplaçable (3) sur lequel, à chaque fois, un segment de frein (4) est monté grâce à une ouverture d'appui (4d) analogue à une demi-coquille réalisée dans l'entretoise (4c) de ce dernier,
caractérisé en ce que,
à l'état initial, chaque manchon (3) a une section ovale et est fendu longitudinalement.

2. Frein à tambour selon la revendication 1, caractérisé en ce que les extrémités des manchons fendus (3) sont munies de bords de serrage (3a) dirigés vers l'intérieur.

3. Frein à tambour selon l'une des revendications 1 ou 2, caractérisé en ce que les manchons (3) sont munis, sur leurs bords de serrage (3a), de dents (3b) en prise avec la surface des axes ou des tourillons (2a).

4. Frein à tambour selon l'une des revendications 1 à 3, caractérisé en ce que les axes sont réalisés sous forme de tourillons (2a) issus du support de frein (2) et formant une seule pièce avec lui.

5. Frein à tambour selon l'une des revendications 1 à 4, caractérisé en ce que chaque axe ou tourillon (2a) comporte un méplat (2b) ayant une action combinée avec les bords de serrage (3a) et/ou les dents (3b) du manchon (3).

6. Frein à tambour selon l'une des revendications 1 à 5, dans lequel les segments de frein (4) possèdent chacun deux entretoises de segment de frein (4c) disposées sur la face inférieure du support de garniture de frein (4a), caractérisé en ce que le support de frein (2) est réalisé avec deux couples de tourillons (2) parallèles et dirigés vers l'extérieur.
